# EUROPÄISCHE PATENTSCHRIFT

(11) **EP 0 655 576 B1**
(45) Veröffentlichungstag und Bekanntmachung des Hinweises auf die Patenterteilung: **07.05.1997**
(21) Anmeldenummer: 93120009.1
(22) Anmeldetag: 11.12.1993
(51) Int. Cl.: F16L 5/04, F16L 5/14, A62C 2/06, H02G 3/22

(54) **Vorrichtung zur Durchführung von Leitungen durch eine Wandöffnung**
Device for the penetration of conduits through a wall opening
Dispositif pour la traversée de conduits dans l'ouverture d'une paroi

(30) Priorität: 04.11.1993 DE 4337565
(43) Veröffentlichungstag der Anmeldung: 31.05.1995
(73) Patentinhaber: Hauff, Werner, D-89561 Ballmertshofen (DE)
(72) Erfinder: Hauff, Werner, D-89561 Ballmertshofen (DE)
(74) Vertreter: Fay, Hermann, Dipl.-Phys. Dr.

(56) Entgegenhaltungen:
- EP-A- 0 532 885
- DE-C- 4 131 153
- DE-C- 4 131 155

## Beschreibung

Die Erfindung betrifft eine Vorrichtung zur Durchführung von Leitungen, wie Kabel oder Rohre, durch eine Öffnung in einer zwei Brandabschnitte voneinander trennenden Wand, mit einem abgedichtet gegen die Wand in der Wandöffnung angeordneten Schottkasten, der eine auf beiden Seiten der Wand mündende, die Leitungen aufnehmende Durchführungsöffnung bildet, in der erst im Brandfall Brandschutz- und/oder Löschmittel wirksam werden und die Durchführungsöffnung verschließen, und mit mindestens einem im Schottkasten außerhalb der Durchführungsöffnung angeordneten Luftfördergebläse, das im Brandfall eine Luftströmung in der Durchführungsöffnung erzeugt.

Vorrichtungen dieser Art sind aus DE 41 31 153 C1 bekannt und besitzen den Vorteil, daß die Durchführungsöffnung erst im Brandfall durch erst dann zur Wirkung kommende Brandschutz- und/oder Löschmittel geschlossen wird, vorher aber immer offen ist, so daß Änderungen oder Ergänzungen in der Leitungsbelegung der Durchführungsöffnung auf einfache und zeitsparende Weise vorgenommen werden können. Die in der Durchführungsöffnung im Brandfall erzeugte Luftströmung ist in den Mündungen der Durchführungsöffnung nach außen gerichtet. Ihr obliegt die Aufgabe, die Ausbreitung von Rauch durch die Durchführungsöffnung hindurch zu verhindern, wenn zu Beginn des Brandgeschehens die Durchführungsöffnung noch offen ist. Entsteht im Brandfall auf einer Seite der Wand Rauch, verhindert die auf derselben Wandseite aus der Durchführungsöffnung austretende Luftströmung das Eindringen von Rauch oder dergl. Brandgase in die Durchführungsöffnung und in den Schottkasten, bis im weiteren Verlauf des Brandgeschehens die Temperaturen im Schottkasten so hoch werden, daß die Brandschutz- und/oder Löschmittel wirksam zu werden beginnen. Dabei findet insbes. ein im Brandfall die Durchführungsöffnung verschließendes Intumeszenzmaterial Verwendung, das im Schottkasten untergebracht ist und sich bei Erreichen einer materialspezifischen Temperatur um ein Vielfaches seines ursprünglichen Volumens aufbläht und dadurch die Durchführungsöffnung verschließt. Dieses Verschließen findet nicht gleichzeitig über die gesamte Länge der Durchführungsöffnung statt, sondern fortschreitend durch die Durchführungsöffnung hindurch, ausgehend von ihrer der Brandseite zugewandten Mündung in Richtung zu der von der Brandseite abgewandten Mündung hin, und zwar abhängig davon, wie sich während des Brandgeschehens die Temperaturerhöhung durch den Schottkasten ausbreitet und dadurch in der Durchführungsöffnung längs der Leitungen die zum Aufblähen des Intumeszenzmaterials führenden Temperaturen erreicht werden. - Probleme können bei derartigen Vorrichtungen u. U. dann entstehen, wenn die beginnende Wirkung der Brandschutz- und/oder Löschmittel damit verbunden ist, daß sich Gase, Staubteilchen oder feine Tröpfchen aus dem Brandschutz- und/oder Löschmittel bilden, die von der Luftströmung im noch offenen Teil der Durchführungsöffnung erfaßt und auf der vom Brandgeschehen abgewandten Seite der Wand durch die dortige Mündung der Durchführungsöffnung aus dem Schottkasten als Gas und Rauch in den vom Brandgeschehen noch unbetroffenen Brandabschnitt ausgetragen werden. Sind die Leitungen von elektrischen Kabeln gebildet, kann solches Gas und solcher Rauch auch dadurch entstehen, daß infolge Wärmeleitung durch die Kabelseelen die aus isolierendem Kunststoff oder Gummi bestehenden Kabelmäntel schon an Stellen in der Durchführungsöffnung zu schmelzen und sich zu zersetzen beginnen, bis zu denen der Schließvorgang durch das expandierende Intumeszenzmaterial noch gar nicht vorgedrungen ist. Schließlich kann die an der der Brandseite zugewandten Mündung der Durchführungsöffnung nach außen gerichtete Luftströmung den Schließvorgang durch das expandierende Intumeszenzmaterial beeinträchtigen, nämlich dann, wenn die Luftströmung so stark ist, daß sie das aufschäumende Intumeszenzmaterial durchströmen und darin Luftkanäle ausbilden kann, die dann auch im expandierten und ausgehärteten Intumeszenzmaterial noch erhalten sind und nach Beendigung der Luftströmung, etwa bei Ausfall des Luftfördergebläses, Rauch und Feuer zur brandabgewandten Wandseite durchtreten lassen.

Der Erfindung liegt die Aufgabe zugrunde, eine Vorrichtung der eingangs genannten Art so auszubilden, daß die Gefahr eines Gas- und Rauchaustritts auf der vom Brand abgewandten Seite der Wand vermieden und die Feuerwiderstandsdauer der Vorrichtung insgesamt möglichst vergrößert wird.

Diese Aufgabe wird nach der Erfindung dadurch gelöst, daß in der Durchführungsöffung zumindest in ihren Endbereichen beidseits der Wand Luftansaugöffnungen münden, die mit der Ansaugseite des Luftfördergebläses in Verbindung stehen, dessen Druckseite an mindestens je eine Luftaustrittsöffnung auf beiden Seiten der Wand angeschlossen ist, wobei Steuermittel vorgesehen sind, die im Brandfall nur die auf der Brandseite der Wand befindliche Luftaustrittsöffnung mit dem Luftfördergebläse verbinden. Eine besonders vorteilhafte Ausführungsform ist dadurch gekennzeichnet, daß die Luftansaugöffnungen verteilt über die gesamte Länge der Durchführungsöffnung vorgesehen sind.

Durch die Erfindung wird erreicht, daß in der Durchführungsöffnung nicht nur in sie eintretender, sondern auch in ihr selbst entstehender Rauch sowie entsprechendes Gas, sei es durch das Expandieren des Intumeszenzmaterials oder durch das Abschmelzen von Kabelnmänteln, unmittelbar durch die Luftansaugöffnungen aus der Durchführungsöffnung abgesaugt und auf der dem Brand zugewandten Seite der Wand ausgeblasen wird. Die Anordnung dieser Luftansaugöffnungen zumindest in den beiden Endbereichen der Durchführungsöffnung, ebenso aber auch die Verteilung der Luftansaugöffnung über die gesamte Länge der Durchführungsöffnung gewährleistet, daß die Rauchabsaugung wirksam bleibt, während der Verschluß durch das aufschäumende Intumeszenzmaterial in der Durchführungsöffnung von deren einem zum anderen Ende fortschreitet. Da die Luftansaugöffnungen in dem vom expandierten Intumeszenzmaterial schon verschlossenen Bereich der Durchführungsöffnung ebenfalls verschlossen werden, wird die Absaugwirkung durch die jeweils noch offen gebliebenen Luftansaugöffnungen hindurch sogar verstärkt und verbessert. Gleichzeitig können im expandierten Intumeszenzmaterial durch die Absaugung keine zwischen beiden Mündungen der Durchführungsöffnung durchgehenden Luftkanäle entstehen.

Eine bevorzugte Ausführungsform der Erfindung ist dadurch gekennzeichnet, daß die Luftansaugöffnungen die Durchführungsöffnung mit einer davon im übrigen getrennten Ansaugkammer verbinden, in der das Luftfördergebläse mit seiner Ansaugseite mündet. Eine solche Ansaugkammer gewährleistet, daß die Verbindung zwischen den Luftansaugöffnungen und dem Luftfördergebläse während des Brandgeschehens aufrecht erhalten bleibt, weil die Ansaugkammer selbst durch das sich aufblähende Intumeszenzmaterial nicht verschlossen werden kann. Im einzelnen empfiehlt es sich, daß die Luftansaugöffnungen eine Zwischenwand durchsetzen, welche die Durchführungsöffnung von der Ansaugkammer trennt. Zweckmäßigerweise erstreckt sich die Ansaugkammer in Leitungslängsrichtung über die Länge der Durchführungsöffnung. Die Zwischenwand weist vorzugsweise auf der der Durchführungsöffnung zugewandten Seite ein Brandschutzmittel in Form von Intumeszenzmaterial auf, das im Brandfall infolge der Wärmeeinwirkung aufschäumt und dabei die Luftansaugöffnungen im expandierenden Bereich des Intumeszenzmaterials verschließt. Ansaugkammerseitig kann die Zwischenwand zweckmäßigerweise eine mit dem Intumeszenzmaterial verbundene Blechplatte aufweisen, welche die Zwischenwand statisch stabilisiert und die Ausbreitung des sich aufblähenden Intumeszenzmaterials in die Ansaugkammer verhindert.

Hinsichtlich der Abführung der abgesaugten Luft auf der Druckseite des Luftfördergebläses ist eine besonders vorteilhafte Ausführungsform der Erfindung dadurch gekennzeichnet, daß das Luftfördergebläse ausgangsseitig an im Schottkasten vorgesehene und zu den Luftaustrittsöffnungen führende Strömungskanäle angeschlossen ist, in welchen die Steuermittel als verstellbare Sperrorgane angeordnet sind, deren Steuerung so ausgebildet ist, daß bei Brand in einem der beiden Brandabschnitte sich dasjenige Sperrorgan schließt, das in dem zur Luftaustrittsöffnung auf der jeweils anderen, dem Brand abgewandten Seite der Wand führenden Strömungskanal angeordnet ist. Die Steuerung der Sperrorgane kann beispielsweise durch Brand- und/oder Rauchmelder erfolgen, die in den Brandabschnitten beidseits der Wand vorgesehen sind. Auf jeden Fall wird durch die Sperrorgane erreicht, daß die Luftaustrittsöffnung auf der vom Brand abgewandten Seite der Wand verschlossen und die aus der Durchführungsöffnung abgesaugte Luft nur auf der dem Brand zugewandten Wandseite ausgeblasen wird. Eine in konstruktiver wie auch steuerungstechnischer Hinsicht besonders vorteilhafte Ausführungsform ist dadurch gekennzeichnet, daß die Strömungskanäle einen die Steuermittel bildenden gemeinsamen Schließkörper aufweisen, der in den Strömungskanälen jeweils bis in eine Endstellung verstellbar ist, in der er den jeweiligen Strömungskanal verschließt. Der Schließkörper besteht zweckmäßigerweise aus einem brandbeständigen Werkstoff, wie Kalzium-Silikat, und trägt eine Umkleidung aus Intumeszenzmaterial, das beim Aufschäumen einen zuverlässigen Verschluß sowohl der brandabgewandten Luftaustrittsöffnung als auch des zu ihr hinführenden Strömungskanals ergibt.

Die Luft, die an der dem Brand zugewandten Luftaustrittsöffnung austritt, ist, da sie im wesentlichen von der brandabgewandten Seite der Wand wie des sich in der Durchführungsöffnung ausbildenden Verschlusses stammt, kühler als die Luft auf der dem Brand zugewandten Seite der Wand. Dies kann ausgenutzt werden, die Feuerwiderstandsdauer der Vorrichtung weiter zu verbessern. Dazu wird als besonders bevorzugte Ausführungsform der Erfindung empfohlen, daß die Luftaustrittsöffnungen im Mündungsbereich der Durchführungsöffnung angeordnet und so ausgebildet sind, daß der aus ihnen austretende Luftstrom über die gesamte Breite der Durchführungsöffnung auf die jeweils aus der Durchführungsöffnung austretenden Leitungen gerichtet ist. Dieser Luftstrom kann somit eine Kühlung der Leitungen auf der dem Brand zugewandten Seite noch vor deren Eintritt in die Durchführungsöffnung bewirken. Dabei erstrecken sich zweckmäßigerweise die Luftaustrittsöffnungen längs des der Durchführungsöffnung zugewandten Randes der Stirnwände des Schottkastens und die Strömungskanäle im wesentlichen über die gesamte Innenfläche der Stirnwände, was letzteres zusätzlich eine Kühlung der dem Brand zugewandten Stirnwand des Schottkastens ergibt.

Im einzelnen empfiehlt es sich, die Anordnung so zu treffen, daß der Schottkasten eine Trennwand aufweist, die einerseits zusammen mit der Schottkastenwand die Strömungskanäle und andererseits zusammen mit der Zwischenwand die Ansaugkammer bildet. Die in den Endbereichen der Durchführungsöffnung vorgesehenen Luftansaugöffnungen sind zweckmäßigerweise als über die Breite der Durchführungsöffnung durchgehender Spalt zwischen der Trennwand einerseits und der Zwischenwand andererseits ausgebildet. Nach einem weiteren vorteilhaften Vorschlag besitzt die Trennwand in beiden Endbereichen der Durchführungsöffnung je einen der Durchführungsöffnung zugewandten, sich jeweils zwischen den Luftansaugöffnungen und den Luftaustrittsöffnungen erstreckenden Rand, an dem sie in die Durchführungsöffnung herabhängende Vorhänge aus einem anorganischen feuerfesten Textilmaterial trägt, um Zugluft durch die offene Durchführungsöffnung hindurch möglichst zu verhindern. Im übrigen kann es von Vorteil sei, in der Ansaugkammer von der angesaugten Luft durchströmte Drahtwolle aus Kupfer oder einem anderen gut wärmeleitenden Werkstoff vorzusehen, die in wärmeleitendem Kontakt mit den den Ansaugraum umgebenden Wänden, insbes. der Trennwand steht, um auf diese Weise zu erreichen, daß sich die angesaugte Luft auf ihrem Weg durch die Ansaugkammer und die Strömungskanäle möglichst auf die Temperatur des Schottkastens selbst abkühlen kann.

Im folgenden wird die Erfindung an in der Zeichnung dargestellten Ausführungsbeispielen näher erläutert; es zeigen:
- Fig. 1: in schematischer Darstellung eine Vorrichtung nach der Erfindung in einem senkrechten, in Leitungslängsrichtung verlaufenden Schnitt,
- Fig. 2: den Querschnitt II - II in Fig. 1,
- Fig. 3: einen Schnitt durch die Zwischenwand in Richtung der Schnittlinie III - III in Fig. 1,
- Fig. 4: eine andere Ausführungsform der erfindungsgemäßen Vorrichtung in einer der Fig. 1 entsprechenden Darstellung, und
- Fig. 5: den Querschnitt V - V in Fig. 4.

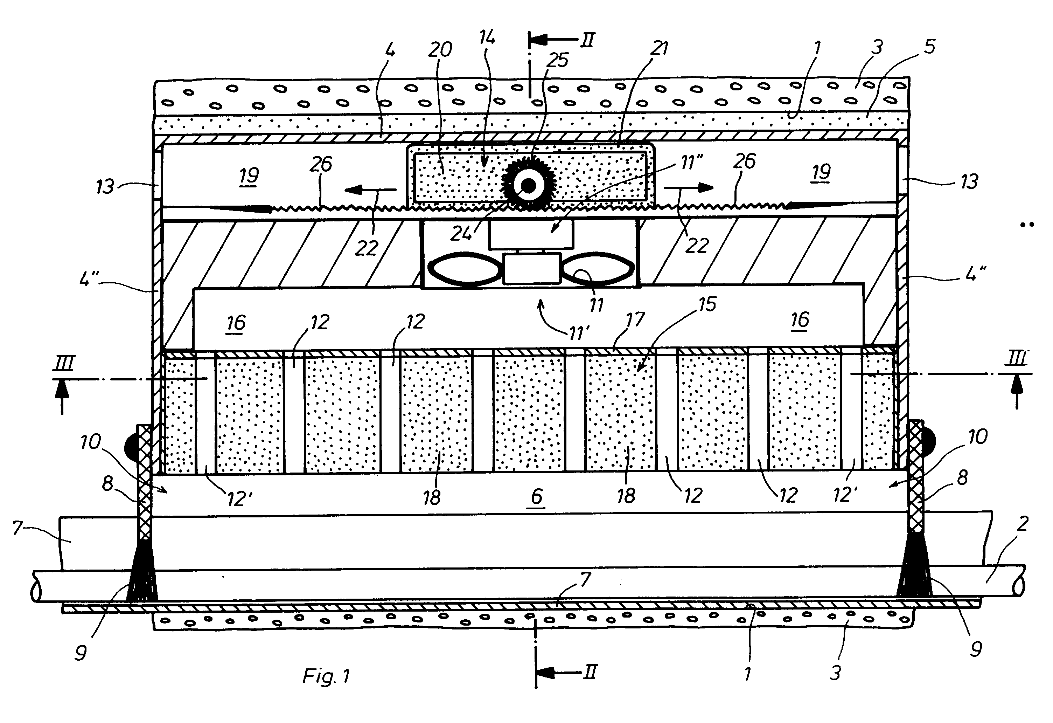

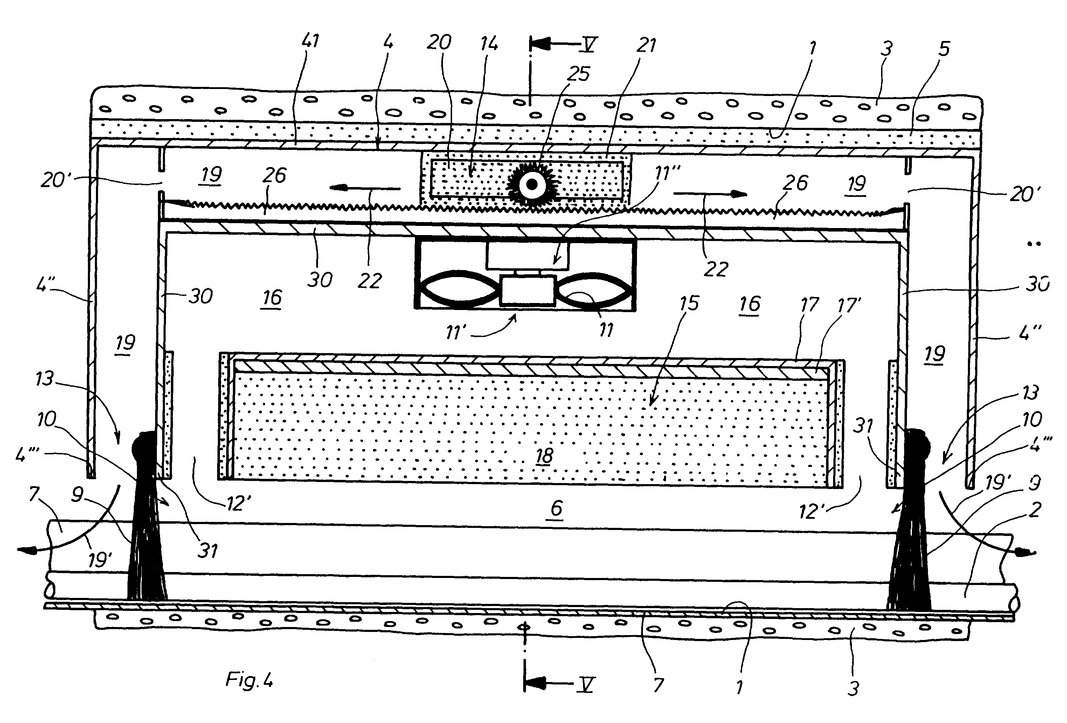

Die in der Zeichnung dargestellten Vorrichtungen dienen zur Brandabschottung einer Wandöffnung 1 für die Durchführung von Leitungen 2, wie elektrische Kabel, Rohre oder dergl., durch eine Wand 3, die zwei Brandabschnitte voneinander trennt. Die Vorrichtung umfaßt einen in der Wandöffnung 1 angeordneten Schottkasten 4, zwischen dem und der Wand 3 eine Abdichtung 5 aus beispielsweise Brandschutzschaum vorgesehen ist. Der Schottkasten 4 ist auf der unteren Laibungsfläche der Wandöffnung 1 durch Seitenwände 4' abgestützt, die sich entlang der seitlichen Laibungswände der Wandöffnung 1 erstrecken. Zwischen diesen Seitenwänden 4' bildet der Schottkasten 4 eine Durchführungsöffnung 6 für die Leitungen 2, die auf einer Leitungspritsche 7 liegen, welche die Durchführungsöffnung 6 durchsetzt. Der Schottkasten 4 ist auf beiden Seiten der Wand 3 mit je einem flexiblen Vorhang 8 versehen, der die Mündung 10 der Durchführungsöffnung 6 nach außen abdeckt und in Fig. 1 aus einer Matte aus einem anorganischen feuerfesten Textilmaterial, beispielsweise auf Silikatbasis, besteht, oder wie in Fig. 4 von einer dichten Reihe von Fransen 9 gebildet ist, die sich auch gemäß Fig. 1 am unteren Rand der Vorhänge 8 befinden können und sich zwischen die Leitungen 2 legen und die vom Vorhang 8 bewirkte Abdeckung verbessern. Die den Vorhang 8 beispielsweise bildende Textilmatte oder die Fransen sind ausreichend flexibel und können sich daher unschwer der jeweiligen Belegung der Leitungspritsche 7 mit den Leitungen 2 anpassen, um Zugluft durch die Durchführungsöffnung 6 hindurch zu verhindern.

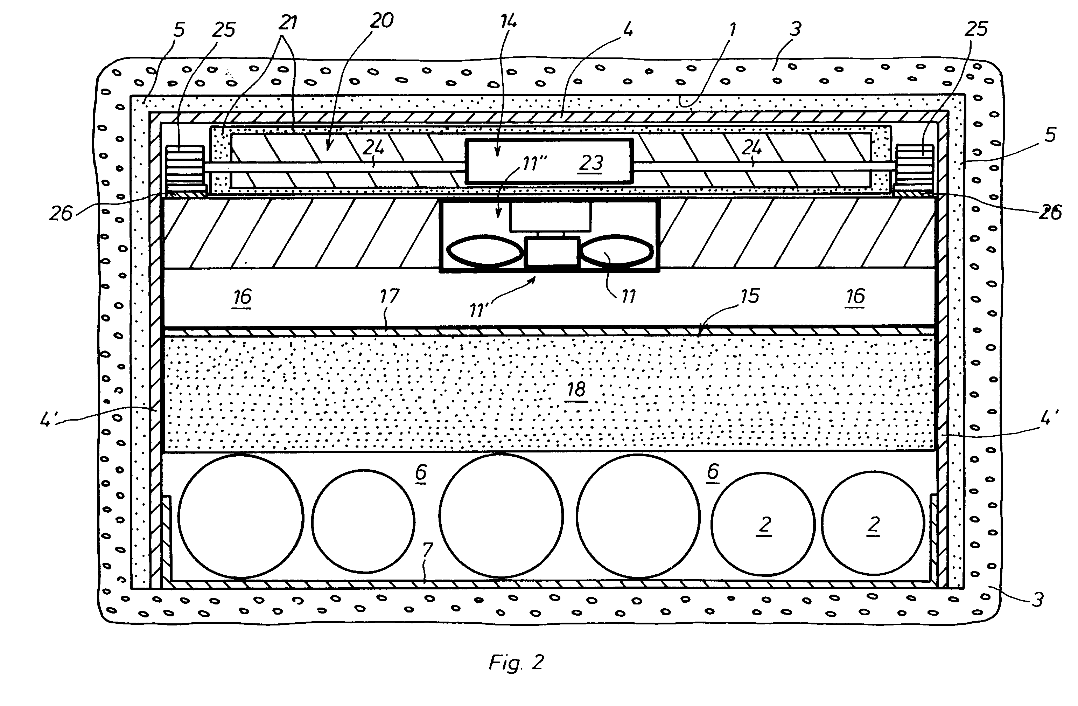

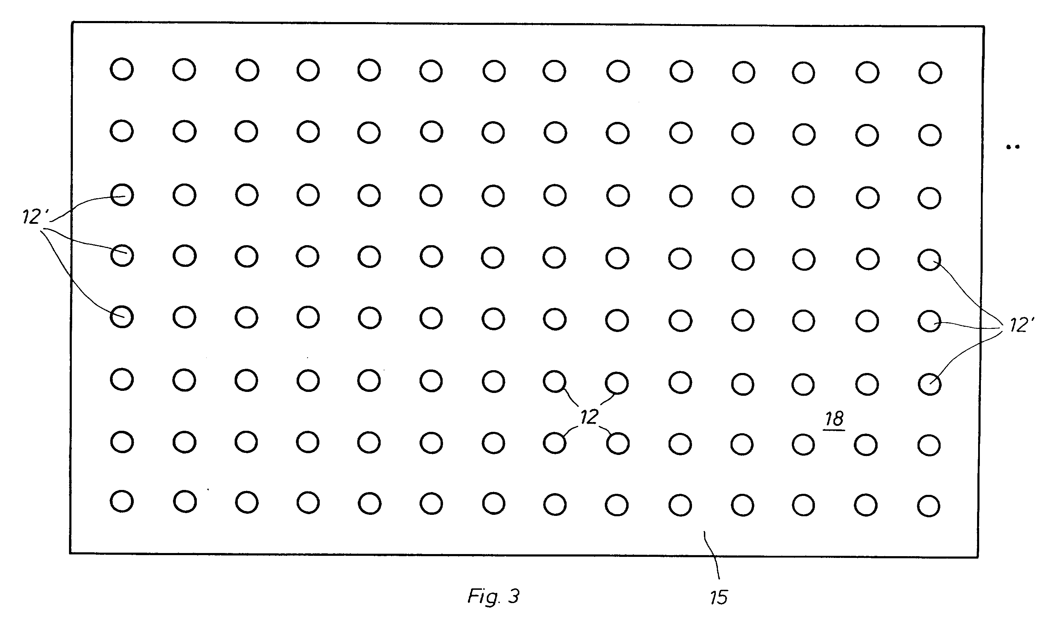

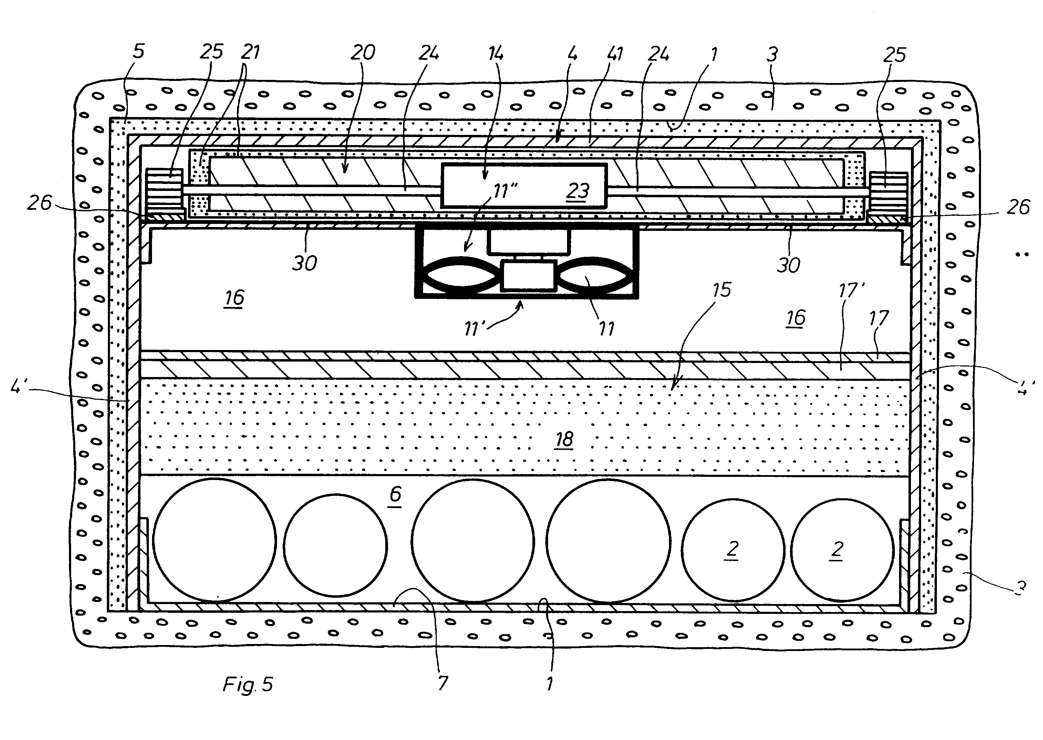

Außerhalb, in den Ausführungsbeispielen nämlich oberhalb, der Durchführungsöffnung 6 ist im Schottkasten 4 mindestens ein Luftfördergebläse 11, im einfachsten Fall ein motorbetriebener Ventilator, angeordnet, das dazu dient, im Brandfall eine Luftströmung in der Durchführungsöffnung 6 zu erzeugen. Dazu münden in der Durchführungsöffnung 6 Luftansaugöffnungen 12, 12' die mit der Ansaugseite 11' des Luftfördergebläses 11 in Verbindung stehen. Diese Luftansaugöffnungen 12' sind mindestens in den Endbereichen der Durchführungsöffnung 6 beidseits der Wand 3 angeordnet. Im Ausführungsbeispiel nach den Fig. 1 bis 3 sind darüber hinaus weitere Luftansaugöffnungen 12 verteilt über die gesamte Länge der Durchführungsöffnung 6 vorgesehen. Die Druckseite 11'' des Luftfördergebläses 11 ist an je eine Luftaustrittsöffnung 13 auf beiden Seiten der Wand 3 angeschlossen, wobei zwischen dem Luftfördergebläse 11 und den Luftaustrittsöffnungen 13 Steuermittel 14 vorgesehen sind, die im Brandfall nur die auf der Brandseite der Wand 3 befindliche Luftaustrittsöffnung 13 mit dem Luftfördergebläse 11 verbinden. Durch die Ansaugöffnungen 12, 12' im Brandfall aus der Durchführungsöffung 6 abgesaugte Luft wird daher durch das Luftfördergebläse 11 durch die der Brandseite zugekehrte Luftaustrittsöfnfung 13 ausgeblasen. Die gegenüber liegende, von der Brandseite abgewandte Luftaustrittsöffnung 13 wird dagegen geschlossen, so daß jeder Rauchaustritt auf der vom Brandgeschehen noch unberührten Wandseite vermieden wird. Die Luftansaugöffnungen 12, 12' verbinden die Durchführungsöffnung 6 mit einer davon im übrigen getrennten Ansaugkammer 16, in der das Luftfördergebläse 11 mit seiner Ansaugseite 11' mündet. Dabei durchsetzen die Luftansaugöffnungen 12, 12' eine Zwischenwand 15, welche die Durchführungsöffnung 6 von der Ansaugkammer 16 trennt. Die Ansaugkammer 16 erstreckt sich in Leitungslängsrichtung über die ganze Länge der Durchführungsöffnung 6. Die Zwischenwand 15 trägt auf ihrer der Durchführungsöffnung 6 zugewandten Seite ein Brandschutzmittel in Form von Intumeszenzmaterial 18, das im Brandfall infolge der Wärmeeinwirkung aufschäumt und dabei sowohl die Durchführungsöffnung 6 als auch die Luftansaugöffnungen 12, 12' jeweils in demjenigen Bereich verschließt, in dem das Intumeszenzmaterial 18 im Verlauf des Brandgeschehens gerade expandiert und der dadurch bewirkte Verschluß der Durchführungsöffnung 6 in deren Längsrichtung fortschreitet, nämlich ausgehend von der der Brandseite zugewandten Mündung 10 in Richtung zur jeweils gegenüber liegenden Mündung der Durchführungsöffnung 6. Das Intumeszenzmaterial 18 erstreckt sich ebenfalls über die gesamte Länge der Durchführungsöffnung 6 und kann daher unschwer in der jeweils für einen sicheren Verschluß der Durchführungsöffnung 6 erforderlichen Menge im Schottkasten 4 untergebracht werden. Auf der Seite der Ansaugkammer 16 weist die Zwischenwand 15 eine mit dem Intumeszenzmaterial 18 verbundene Blechplatte 17 auf, die der Zwischenwand 15 statische Festigkeit und Beständigkeit gibt, so daß sich das Intumeszenzmaterial 18 nicht so in die Ansaugkammer 16 auszubreiten vermag, daß diese verschlossen werden könnte, solange ein Teil der Durchführungsöffnung 6 noch offen ist und das Luftfördergebläse 11 arbeitet. Im übrigen ist im Ausführungsbeispiel nach den Fig. 4 und 5 zwischen dem Intumeszenzmaterial 18 und der Blechplatte 17 eine Wärmedämmplatte 17' aus Kalzium-Silikat angeordnet, die den Wärmeübergang aus der Durchführungsöffnung 6 in die Ansaugkammer 16 verringert. Ausgangsseitig ist das Luftfördergebläse 11 an im Schottkasten 4 ausgebildete und zu den Luftaustrittsöffnungen 13 führende Strömungskanäle 19 angeschlossen. In diesen Strömungskanälen 19 befinden sich die Steuermittel 14 als verstellbare Sperrorgane, deren Steuerung so ausgebildet ist, daß bei Brand in einem der beiden Brandabschnitte sich dasjenige Sperrorgan schließt, das in den zur Luftaustrittsöffnung 13 auf der jeweils anderen, d. h. dem Brand abgewandten Seite der Wand 3 führenden Strömungskanal 19 angeordnet ist. Dabei ist in beiden Ausführungsbeispielen die Anordnung so getroffen, daß die Strömungskanäle 19 einen die Steuermittel 14 bildenden gemeinsamen Schließkörper 20 enthalten, der in den Strömungskanälen 19 jeweils bis in eine Endstellung verstellbar ist, in der er den jeweiligen Strömungskanal 19 verschließt. Der Schließkörper 20 besteht dabei aus einem brandbeständigen Werkstoff, wie Kalzium-Silikat, und trägt im übrigen eine Umkleidung 21 aus Intumeszenzmaterial. Der Schließkörper 20 ist wahlweise in Richtung der beiden Pfeile 22 in den Strömungskanälen 19 bewegbar. Dazu dient ein im Schließkörper 20 angeordneter Antriebsmotor 23, der über zwei Wellen 24 auf beiden Seiten des Schließkörpers 20 vorgesehene Zahnräder 25 antreibt, die mit je einer sich längs der Strömungskanäle 19 erstreckenden Zahnstange 26 kämmen. Wird der Antriebsmotor 23 durch beispielsweise in der Zeichnung nicht dargestellte Brand- und/oder Rauchmelder in den Brandabschnitten in der einen oder anderen Richtung eingeschaltet, werden die Zahnräder 25 synchron gedreht und dadurch der Schließkörper 20 in der jeweils gewünschten Richtung bis in die den Verschluß des Strömungskanals 19 ergebende Endstellung verschoben. Im Ausführungsbeispiel nach den Fig. 1 bis 3 sind dabei die unmittelbar in den Stirnwänden 4'' des Schottkastens ausgebildeten Luftaustrittsöffnungen 13 im in Leitungslängsrichtung gesehenen Querschnitt etwas kleiner als die Luftströmungskanäle 19, so daß der in der Endstellung lediglich die Luftaustrittsöffnung 13 abdeckende Schließkörper 20 in den Strömungskanälen 19 jeweils Platz für die Zahnstangen 26 und die Zahnräder 25 läßt. Im Ausführungsbeispiel nach den Fig. 4 und 5 dagegen ist in dem Strömungskanal jeweils eine Blende 20' angeordnet, die in der Endstellung des Schließkörpers 20 für diesen einen Sitz bildet, an dem der Schließkörper 20 unter Verschluß der Blendenöffnung anliegt. Der Anschluß des Antriebsmotors 23 erfolgt im übrigen über Schleppleitungen, die der Einfachheit wegen in der Zeichnung nicht dargestellt sind.

Im Ausführungsbeispiel nach den Fig. 4 und 5 sind die Luftaustrittsöffnungen 13 unmittelbar im Mündungsbereich 10 der Durchführungsöffnung 6 so angeordnet und ausgebildet, daß der aus ihnen austretende, in Fig. 4 durch Pfeile 19' angedeutete Luftstrom über die gesamte Breite der Durchführungsöffnung 6 auf die jeweils aus der Durchführungsöffnung 6 austretenden Leitungen 2 gerichtet ist und diese auch außerhalb des Schottkastens 4 kühlt. Die Luftaustrittsöffnungen 13 erstrecken sich längs des der Durchführungsöffnung 6 zugewandten Randes 4''' der Stirnwände 4'' des Schottkastens 4. Außerdem verlaufen die Strömungskanäle 19 im wesentlichen über die gesamte Innenfläche der Stirnwände 4'', so daß die die Strömungskanäle 19 durchströmende Luft die Stirnwände 4'' an der Innenseite kühlt. Im einzelnen besitzt der Schottkasten 4 im Ausführungsbeispiel nach den Fig. 4 und 5 eine Trennwand 30, die einerseits mit der oberen Schottkastenwand 41 und den Stirnwänden 4'' die Strömungskanäle 19 und andererseits zusammen mit der Zwischenwand 15 die Ansaugkammer 16 bildet. Die Trennwand 30 besteht ebenso wie die Schottkastenwände 4', 4'', 41 aus Metallblech. Die in den Endbereichen der Durchführungsöffnung 6 vorgesehenen Luftansaugöffnungen 12' sind als Spalt ausgebildet, der sich durchgehend über die Breite der Durchführungsöffnung 6 zwischen der Trennwand 30 einerseits und der Zwischenwand 15 andererseits erstreckt. Die Trennwand 30 bildet in beiden Endbereichen der Durchführungsöffnung 6 je einen der Durchführungsöffnung 6 zugewandten und sich jeweils zwischen den Luftansaugöffnungen 12' einerseits und den Luftaustrittsöffnungen 13 andererseits erstreckenden Rand 31, an dem die in die Durchführungsöffnung 6 herabhängenden Fransen 9 befestigt sind. Im übrigen befindet sich in der Ansaugkammer 16 von der angesaugten Luft durchströmte, in der Zeichnung zur besseren Übersichtlichkeit nicht dargestellte Drahtwolle aus Kupfer, die in wärmeleitendem Kontakt mit den die Ansaugkammer 16 umgebenden Wänden, insbes. der Trennwand 30 und der Blechplatte 17 der Zwischenwand 16 steht.

## Patentansprüche

1. Vorrichtung zur Durchführung von Leitungen (2), wie Kabel oder Rohre, durch eine Öffnung (1) in einer zwei Brandabschnitte voneinander trennenden Wand (3), mit einem abgedichtet gegen die Wand (3) in der Wandöffnung (1) angeordneten Schottkasten (4), der eine auf beiden Seiten der Wand (3) mündende, die Leitungen (2) aufnehmende Durchführungsöffnung (6) bildet, in der erst im Brandfall Brandschutz- und/oder Löschmittel (18) wirksam werden und die Durchführungsöffnung (6) verschließen, und mit mindestens einem im Schottkasten (4) außerhalb der Durchführungsöffnung (6) angeordneten Luftfördergebläse (11), das im Brandfall eine Luftströmung in der Durchführungsöffnung (6) erzeugt, dadurch gekennzeichnet, daß in der Durchführungsöffnung (6) zumindest in ihren Endbereichen beidseits der Wand (3) Luftansaugöffnungen (12, 12') münden, die mit der Ansaugseite (11') des Luftfördergebläses (11) in Verbindung stehen, dessen Druckseite (11") an mindestens je eine Luftaustrittsöffnung (13) auf beiden Seiten der Wand (3) angeschlossen ist, wobei Steuermittel (14) vorgesehen sind, die im Brandfall nur die auf der Brandseite der Wand (3) befindliche Luftaustrittsöffnung (13) mit dem Luftfördergebläse (11) verbinden.

2. Vorrichtung nach Anspruch 1, dadurch gekennzeichnet, daß die Luftansaugöffnungen (12, 12') verteilt über die gesamte Länge der Durchführungsöffnung (6) vorgesehen sind.

3. Vorrichtung nach Anspruch 1 oder 2, dadurch gekennzeichnet, daß die Luftansaugöffnungen (12, 12') die Durchführungsöffnung (6) mit einer davon im übrigen getrennten Ansaugkammer (16) verbinden, in der das Luftfördergebläse (11) mit seiner Ansaugseite (11') mündet.

4. Vorrichtung nach Anspruch 3, dadurch gekennzeichnet, daß die Luftansaugöffnungen (12, 12') eine Zwischenwand (15) durchsetzen, welche die Durchführungsöffnung (6) von der Ansaugkammer (16) trennt.

5. Vorrichtung nach Anspruch 4, dadurch gekennzeichnet, daß sich die Ansaugkammer (16) in Leitungslängsrichtung über die Länge der Durchführungsöffnung (6) erstreckt.

6. Vorrichtung nach Anspruch 4 oder 5, dadurch gekennzeichnet, daß die Zwischenwand (15) auf der der Durchführungsöffnung (6) zugewandten Seite ein Brandschutzmittel in Form von Intumeszenzmaterial (18) aufweist, das im Brandfall infolge der Wärmeeinwirkung aufschäumt und dabei die Luftansaugöffnungen (12, 12') im expandierenden Bereich des Intumeszenzmaterials verschließt.

7. Vorrichtung nach Anspruch 6, dadurch gekennzeichnet, daß die Zwischenwand (15) ansaugkammerseitig eine mit dem Intumeszenzmaterial (18) verbundene Blechplatte (17) aufweist.

8. Vorrichtung nach einem der Ansprüche 1 bis 7, dadurch gekennzeichnet, daß das Luftfördergebläse (11) ausgangsseitig an im Schottkasten (4) vorgesehene und zu den Luftaustrittsöffnungen (13) führende Strömungskanäle (19) angeschlossen ist, in welchen die Steuermittel (14) als verstellbare Sperrorgane angeordnet sind, deren Steuerung so ausgebildet ist, daß bei Brand in einem der beiden Brandabschnitte sich dasjenige Sperrorgan schließt, das in dem zur Luftaustrittsöffnung (13) auf der jeweils anderen, dem Brand abgewandten Seite der Wand (3) führenden Strömungskanal (19) angeordnet ist.

9. Vorrichtung nach Anspruch 8, dadurch gekennzeichnet, daß die Strömungskanäle (19) einen die Steuermittel (14) bildenden gemeinsamen Schließkörper (20) aufweisen, der in den Strömungskanälen (19) jeweils bis in eine Endstellung verstellbar ist, in der er den jeweiligen Strömungskanal (19) verschließt.

10. Vorrichtung nach Anspruch 9, dadurch gekennzeichnet, daß der Schließkörper (20) aus einem brandbeständigen Werkstoff, wie Kalzium-Silikat, besteht und eine Umkleidung (21) aus Intumeszenzmaterial trägt.

11. Vorrichtung nach einem der Ansprüche 1 bis 10, dadurch gekennzeichnet, daß die Luftaustrittsöffnungen (13) im Mündungsbereich der Durchführungsöffnung (6) angeordnet und so ausgebildet sind, daß der aus ihnen austretende Luftstrom über die gesamte Breite der Durchführungsöffnung (6) auf die jeweils aus der Durchführungsöffnung (6) austretenden Leitungen (2) gerichtet ist.

12. Vorrichtung nach Anspruch 11, dadurch gekennzeichnet, daß sich die Luftaustrittsöffnung (13) längs des der Durchführungsöffnung (6) zugewandten Randes (4''') der Stirnwände (4") des Schottkastens (4) und die Strömungskanäle (19) im wesentlichen über die gesamte Innenfläche der Stirnwände (4") erstrecken.

13. Vorrichtung nach Anspruch 12, dadurch gekennzeichnet, daß der Schottkasten (4) eine Trennwand (30) aufweist, die einerseits zusammen mit der Schottkastenwand die Strömungskanäle (19) und andererseits zusammen mit der Zwischenwand (15) die Ansaugkammer (16) bildet.

14. Vorrichtung nach Anspruch 13, dadurch gekennzeichnet, daß die in den Endbereichen der Durchführungsöffnung (6) vorgesehenen Luftansaugöffnungen (12, 12') als über die Breite der Durchführungsöffnung (6) durchgehender Spalt zwischen der Trennwand (30) einerseits und der Zwischenwand (15) andererseits ausgebildet sind.

15. Vorrichtung nach Anspruch 14, dadurch gekennzeichnet, daß die Trennwand (30) in beiden Endbereichen der Durchführungsöffnung (6) je einen der Durchführungsöffnung (6) zugewandten, sich jeweils zwischen den Luftansaugöffnungen (12) und den Luftaustrittsöffnungen (13) erstreckenden Rand (31) aufweist und an diesem Rand flexible, in die Durchführungsöffnung (6) herabhängende Vorhänge (8, 9) aus einem anorganischen feuerfesten Textilmaterial trägt.

16. Vorrichtung nach Anspruch 4 oder einem der darauf bezogenen weiteren Ansprüche, dadurch gekennzeichnet, daß in der Ansaugkammer (16) von der angesaugten Luft durchströmte Drahtwolle aus Kupfer oder einem anderen gut wärmeleitenden Werkstoff vorgesehen ist, die in wärmeleitendem Kontakt mit den den Ansaugraum (16) umgebenden Wänden, insbes. der Trennwand (30), steht.

## Claims

1. Device for the feeding-through of lines (2), such as cables or tubes, through an aperture (1) in a wall (3) separating two tire sections, with a compartiuent (4) which is situated in the wall opening (1) and sealed off from the wall (3) and which formed a feed through aperture (6) which terminates on both sides of the wall (3) and which accommodates the lines (2) and in which fire-protection and/or extinguishing agents (18) only take effect and close the feed-through apertures in the event of fire, and with at least one air blower (11) which is situated in the compartment (4) outside the feed-through aperture (6) and which in the event of fire generates a flow of air in the said feed-through aperture (6), characterised by the fact that in the feed-through aperture (6), at least in its end zones, on both sides of the wall (3), air section intake apertures (12, 12') terminate which are connected with the suction intakes side (11') of the air blower (11), of which the pressure side (11") is connected to at least one air outlet aperture (13) on each side of the wall (3), control means (14) being provided by which in the event of fire, only the air outlet aperture on the "fire side" of the wall is connected with the air blower (11).

2. Device in according with Claim 1, characterised by the fact that the air suction intake apertures (12, 12') are distributed over the entire length of the feed-through aperture (6).

3. Device in accordance with Claim 1 or 2, characterised by the fact that the air suction intake aperture (12, 12') connect the feed-through aperture (6) with suction intake chamber (16) which is otherwise separated from it and in which the air blower (11) terminates by its suction intake side (11').

4. Device in accordance with Claim 3, characterised by the fact that air suction intake apertures (12, 12') pass through a partition wall (15) separating the feed-through aperture (6) from the suction intake chamber (16).

5. Device in accordance with Claim 4, characterised by the fact that the suction intake chamber (16) extends, in the longitudinal direction of the line, over the length of the feed-through aperture (6).

6. Device in accordance with Claim 4 or 5, characterised by the fact that the partition wall (15) is provided, on the side facing towards the feed-through aperture (6) with a fire protection agent in the form of intumescent material (18) which in the event of fire, foams up from the effect of the heat, thus closing the air suction intake apertures (12, 12') in the expansion zone of the intumescent material.

7. Device in accordance with Claim 6, characterised by the fact that the partition wall (15) is provided, on the side corresponding to the suction intake chambers, with a metal plate (17) connected with the intumescent material (18).

8. Device in accordance with any one of Claims 1-7, characterised by the fact that the air blower (I I) is connected on the outlet side to flow channels (19) which are provided in the compartment (4) and which lead to the air outlet apertures (13) and which contain the control means (14), taking the form of adjustable shut-off devices, of which the control system is so designed that in the event of fire in one of the two fire sections that shut-off device is closed which is situated in the flow channel (19) leading to the air outlet aperture (13) which is present on the other side of the wall (3), aiid which faces away from the fire.

9. Device iii accordance with Claim 9, characterised by the fact that the flow channels (19) are provided with one common closure body (20) which forms the control means (14) and which in each of the flow channels (19) is adjustable to an end position which it seals off the flow channel (19) in question.

10. Device in accordance with Claim 9, characterised by the fact that the closure body (20) consists of a fire-resisting material such as calcium silicate and is provided with a covering (21) of intumescent material.

11. Device iii accordance with any one of Claims 1-10, characterised by the fact that the air outlet apertures (13) are positioned in the outlet zone of the feed-through aperture (6) and are so designed that the flow of air emerging from them is directed over the entire width of the feed-through aperture (6), onto the lines (2) emerging from the feed-through aperture (6) concerned.

12. Device in accordance with Claim 11, characterised by the fact that the air outlet aperture (13) extends along the edge (4"') of the end walls (4") of the compartment (4) which faces towards the feed-through aperture (6) and the flow channels (19) mainly extend over the entire internal surface of the end walls (4").

13. Device in accordance with Claim 12, characterised by the fact that the compartment (4) is provided with a dividing wall (30) which on the one hand in conjunction with the wall of the compartment forms the flow channel while on the other hand in conjunction with the wall of the compartment it forms the flow channel.

14. Device iii accordance with Claim 13, characterised by the fact that the air suction aperture (12, 12') provided iii the end zones of the feed-through aperture (6) take the form of a continuous gap, extending over the width of the feed-through aperture (6), between the dividing wall (30) on the one hand and the partition wall (15) on the other.

15. Device in accordance with Claim 14, characterised by the fact that the dividing wall (30) is provided, in each of the two end zones of the feed-through aperture (6), with an edge (31) facing towards the freed-through aperture (6) and extending between the air suction intake apertures (12) and the air outlet apertures (13), and is provided, on the said edge, with flexible curtains (8, 9) of an inorganic fireproof textile material, which hand down into the feed-through aperture (6).

16. Device in accordance with Claim 4, or one of the further claims referring thereto, characterised by the fact that the suction chamber (16) contains wire wool of copper or of some other material of good thermal conductivity, through which the air taken in by suction flows and which is in heat-conducting contact with the walls surrounding the suction intake chamber, particularly the dividing wall (30).

## Revendications

1. Dispositif pour la traversée de conduits (2), tels que des câbles ou des tuyaux, dans une ouverture (1) d'une paroi (3) séparant l'un de l'autre deux espaces coupe-feu, comportant un caisson formant cloison (4) disposé de manière étanche contre la paroi (3) dans l'ouverture de paroi (1), ledit caisson formant une ouverture de traversée (6) recevant les conduits (2) et débouchant des deux côtés de la paroi (3), et des agents d'extinction et/ou ignifuges (18) qui opèrent dans ledit caisson seulement en cas d'incendie, en obturant l'ouverture de traversée (6), et comportant au moins une soufflante (11) disposée dans le caisson formant cloison (4) à l'extérieur de l'ouverture de traversée (6) ladite soufflante produisant un flux d'air dans l'ouverture de traversée (6), en cas d'incendie, caractérisé en ce que des ouvertures d'aspiration d'air (12, 12') débouchent dans l'ouverture de traversée (6), au moins dans leurs zones terminales, des deux côtés de la paroi (3), lesdites ouvertures d'aspiration étant reliées au côté admission (11') de la soufflante (11) dont le côté refoulement (11") est raccordé à chaque fois à au moins une ouverture de sortie d'air (13) des deux côtés de la paroi (3), des moyens de commande (14) étant prévus pour relier uniquement l'ouverture de sortie d'air (13) se trouvant du côté incendie de la paroi (3) à la soufflante (11), en cas d'incendie.

2. Dispositif suivant la revendication 1, caractérisé en ce que les ouvertures d'admission d'air (12, 12') sont prévues réparties sur toute la longueur de l'ouverture de traversée (6).

3. Dispositif suivant la revendication 1 ou 2, caractérisé en ce que les ouvertures d'admission d'air (12, 12') relient l'ouverture de traversée (6) à une chambre d'admission (16) qui en est séparée par ailleurs, et dans laquelle débouche la soufflante (11), par son côté admission (11').

4. Dispositif suivant la revendication 3, caractérisé en ce que les ouvertures d'admission d'air (12, 12') traversent une paroi intermédiaire (15) qui sépare l'ouverture de traversée (6) de la chambre d'admission (16).

5. Dispositif suivant la revendication 4, caractérisé en ce que la chambre d'admission (16) s'étend, suivant la direction longitudinale du conduit, sur la longueur de l'ouverture de traversée (6).

6. Dispositif suivant la revendication 4 ou 5, caractérisé en ce que la paroi intermédiaire (15) présente de préférence, sur le côté orienté vers l'ouverture de traversée (6), un agent ignifuge sous la forme d'une matière intumescente (18) qui, en cas d'incendie, mousse sous l'effet de la chaleur, obturant ainsi les ouvertures d'admission d'air (12, 12') dans la zone d'expansion de la matière intumescente.

7. Dispositif suivant la revendication 6, caractérisé en ce que du côté de la chambre d'admission, la paroi intermédiaire (15) peut présenter de manière appropriée une plaque de tôle (17) reliée à la matière intumescente (18).

8. Dispositif suivant l'une des revendications 1 à 7, caractérisé en ce que la soufflante (11) est raccordée côté sortie à des canaux d'écoulement (19) prévus dans le caisson formant cloison (4) et conduisant aux ouvertures de sortie d'air (13), dans lesquels canaux sont disposés les moyens de commande (14) sous forme d'organes de verrouillage réglables dont la commande est réalisée de telle sorte qu'en cas d'incendie dans l'un des deux espaces coupe-feu, l'organe de verrouillage qui se ferme est celui qui est disposé dans le canal d'écoulement (19) conduisant à l'ouverture de sortie d'air (13) disposée sur l'autre côté respectif de la paroi (3), opposé à l'incendie.

9. Dispositif suivant la revendication 8, caractérisé en ce que les canaux d'écoulement (19) présentent un corps de fermeture (20) commun formant le moyen de commande (14), pouvant être réglé dans les canaux d'écoulement (19) à chaque fois jusqu'à une position d'extrémité, dans laquelle il obture le canal d'écoulement (19) correspondant.

10. Dispositif suivant la revendication 9, caractérisé en ce que le corps de fermeture (20) est constitué, de manière appropriée, par un matériau résistant au feu tel que du silicate de calcium, et porte un revêtement (21) en matière intumescente

11. Dispositif suivant l'une des revendications 1 à 10, caractérisé en ce que les ouvertures de sortie d'air (13) sont disposées dans la zone d'embouchure de l'ouverture de traversée (6) et sont réalisées de telle sorte que le flux d'air qui en sort soit dirigé, sur toute la largeur de l'ouverture de traversée (6), vers les conduits (2) sortant à chaque fois de l'ouverture de traversée (6).

12. Dispositif suivant la revendication 11, caractérisé en ce que les ouvertures de sortie d'air (13) s'étendent de manière appropriée le long du bord (4"') orienté vers l'ouverture de traversée (6) des parois frontales (4") du caisson formant cloison (4) et les canaux d'écoulement (19) s'étendent essentiellement sur toute la surface intérieure des parois frontales (4").

13. Dispositif suivant la revendication 12, caractérisé en ce que le caisson formant cloison (4) présente une paroi de séparation (30) qui constitue d'une part, avec la paroi de caisson formant cloison, les canaux d'écoulement (19), et d'autre part, avec la paroi intermédiaire (15), la chambre d'admission (16).

14. Dispositif suivant la revendication 13, caractérisé en ce que les ouvertures d'admission d'air (12, 12') prévues dans les zones terminales de l'ouverture de traversée (6) sont réalisées de manière appropriée sous forme de fentes traversant la largeur de l'ouverture de traversée (6), entre la paroi de séparation (30) d'une part et la paroi intermédiaire (15) d'autre part.

15. Dispositif suivant la revendication 14, caractérisé en ce que la paroi de séparation (30) comporte, dans chacune des deux zones terminales de l'ouverture de traversée (6), un bord (31) orienté vers l'ouverture de traversée (6) s'étendant entre les ouvertures d'admission d'air (12) et les ouvertures de sortie d'air (13), sur lequel la paroi de séparation porte des rideaux (8, 9) retombant dans l'ouverture de traversée (6) et composés d'une matière textile incombustible anorganique.

16. Dispositif suivant la revendication 4 ou l'une des revendications s'y rapportant, caractérisé en ce que dans la chambre d'admission (16) est prévue de la laine métallique en cuivre ou une autre matière bonne conductrice thermique, traversée par l'air aspiré, se trouvant en contact thermoconducteur avec les parois entourant l'espace d'admission (16), en particulier la paroi de séparation (30).
